**Europäisches Patentamt**

**European Patent Office**

**Office européen des brevets**

(19)

(11) Veröffentlichungsnummer : **0 372 235 B1**

(12)

# EUROPÄISCHE PATENTSCHRIFT

(45) Veröffentlichungstag der Patentschrift :
15.07.92 Patentblatt 92/29

(51) Int. Cl.⁵ : **C04B 35/52,** C01B 25/027,
H05B 7/09

(21) Anmeldenummer : **89120535.3**

(22) Anmeldetag : **06.11.89**

(54) Elektrodenmasse.

(30) Priorität : **03.12.88 DE 3840828**

(43) Veröffentlichungstag der Anmeldung :
**13.06.90 Patentblatt 90/24**

(45) Bekanntmachung des Hinweises auf die
Patenterteilung :
**15.07.92 Patentblatt 92/29**

(84) Benannte Vertragsstaaten :
**DE NL**

(56) Entgegenhaltungen :
**CH-A- 368 555**
**DE-C- 529 118**
**US-A- 4 158 699**

(73) Patentinhaber : **STENDEL Joachim**
**Georg-Sandmann-Strasse 28**
**W-5040 Brühl (DE)**
Patentinhaber : **MANDELKOW Dietrich**
**Scheffelstrasse 18,**
**W-5000 Köln 41 (DE)**

(72) Erfinder : **STENDEL Joachim**
**Georg-Sandmann-Strasse 28**
**W-5040 Brühl (DE)**
Erfinder : **MANDELKOW Dietrich**
**Scheffelstrasse 18,**
**W-5000 Köln 41 (DE)**

## Beschreibung

Die vorliegende Erfindung betrifft eine Elektrodenmasse für selbstbrennende Dauerelektroden in elektrothermischen Reduktionsöfen zur Herstellung von gelbem Phosphor, welche im wesentlichen aus einer Mischung aus Koksstaub, Anthrazitstaub, körnigem Anthrazit und Steinkohlenteerpech besteht.

Es ist bekannt, selbstbrennende Dauerelektroden, sog. SÖDERBERG-Elektroden, in der Weise herzustellen, daß ungebrannte Elektrodenmasse, welche aus einer Mischung von Anthrazit, Koks, Graphit und Steinkohlenteerpech besteht und sich in einem in den Elektroofen eingeführten Eisenblechmantel mit nach innen gerichteten Blechlamellen befindet, durch die Joulesche Wärme des zugeführten elektrischen Stromes sowie durch die Ofenabhitze gebrannt wird (vergl. "Stahl und Eisen", 1977, Seiten 1279 und 1280).

Die Notwendigkeit, den Abbrand der Elektroden im Elektroofen zu ersetzen, erfordert beim Einsatz von SÖDERBERG-Elektroden die zeitgleiche Nachbildung von neu gebrannter Elektrodenmasse im Eisenblechmantel. Dabei wird die erforderliche Wärme erst unterhalb der Ofendecke im Bereich der stromzuführenden Druckplatten bereitgestellt, wobei das Brennen der Elektrodenmasse im oberen Drittel der etwa 1 m langen Druckplatten soweit fortgeschritten sein muß, daß die Druckplatten jederzeit einen mechanisch tragfähigen Elektrodenstumpf umgreifen. Wird in der Zeiteinheit mehr Elektrode abgebrannt als neu gebrannte Elektrodenmasse nachgebildet wird, so kommt es durch Abreißen der Verbindung zwischen dem bereits gebrannten Elektrodenstumpf und der sich im Eisenblechmantel darüber befindlichen weichen Elektrodenmasse zum Elektrodenbruch. Die Beseitigung eines Elektrodenbruches erfordert neben einem längeren Stillstand des elektrothermischen Reduktionsofens mit dem entsprechenden Produktionsausfall einen erheblichen Reparaturaufwand.

Um der Gefahr eines Elektrodenbruches entgegenzuwirken, sollte der Elektrodenabbrand je Zeiteinheit verringert werden. Das kann durch Verwendung sog. Hohlelektroden erreicht werden, wobei die Hohlelektrode ein Beschickungssystem darstellt, bei welchem durch ein zentral in die Elektrode eingebettetes Rohr feinkörnige Reaktionsmischung in den elektrothermischen Reduktionsofen eingebracht wird, wobei die feinkörnige Reaktionsmischung direkt unter die Elektrode gelangt und deren Spitze abkühlt (vergl. US-A- 2 996 360).

Durch die so bewirkte Kühlung der Elektrodenspitze geht der Abbrand der Elektrode je Zeiteinheit um etwa die Hälfte zurück, so daß die Zeit, welche zum Brennen neuer Elektrodenmasse zur Verfügung steht, verdoppelt wird.

Die durch die längere Brenndauer erreichbare bessere Brennqualität wird jedoch bei der Phosphorherstellung von einem "Schrumpfungsphänomen" überdeckt, eine Erscheinung, bei welcher sich der Stand der Elektrodenmasse im Eisenblechmantel einer Elektrode beispielsweise mit einem Durchmesser von 135 cm im Laufe eines Tages um 2 bis 3 m absenken kann, wobei die geschwundene Menge dem Abbrand der Elektrode von 4 bis 5 Tagen entspricht. Der Volumenverlust ist zu groß, um als eine durch den Brennvorgang der Elektrode bedingte natürliche Schrumpfung hingenommen werden zu können. Es handelt sich vielmehr um ein Austreten von Elektrodenmasse in den Reduktionsofen hinein, wo sie als kohlenstoffhaltiges Material zusammen mit der Möllermischung zunächst ohne nachteiligen Einfluß auf den Ofengang verbraucht wird. Es ist aber nur eine Frage der Zeit, daß bei einem massiven Ausbruch von Elektrodenmasse die Elektrode abreißt.

Hohlelektroden, bei denen der Elektrodenabbrand je Zeiteinheit verringert ist und damit ihre Brenndauer vergrößert bzw. ihre Brennqualität verbessert wird, sollten der Gefahr von Elektrodenbrüchen entgegenwirken. Bei der Phosphorherstellung wird durch das erwähnte Schrumpfungsphänomen, das bei bei der Herstellung von Calciumcarbid eingesetzten Hohlelektroden nicht bekannt ist, die Gefahr von Elektrodenbrüchen bei Verwendung von Hohlelektroden scheinbar vergrößert.

Bei der Untersuchung des erwähnten Schrumpfungsphänomens stellte sich heraus, daß die Qualität des Steinkohlenteerpeches in der Elektrodenmasse, welche bei der Phosphorherstellung mit üblichen Elektroden verwendet wird, beim Einsatz von Hohlelektroden ungeeignet ist.

Um ein Zusammenlaufen der Elektrodenmasse im Eisenblechmantel und die gleichmäßige Ausfüllung seines Querschnittes mit der Elektrodenmasse zu erleichtern, wird bei der Herstellung von Calciumcarbid ein Pech mit einem möglichst niedrigem Erweichungspunkt verwendet. Ein solches Pech wird erhalten, indem man einem stärker ausdestilliertem Pech mit hohem Erweichungspunkt beispielsweise Anthracenöl, welches zwischen 300 und 400°C nahezu rückstandslos verdampft, zusetzt. Der Zusatz von Anthracenöl zum Pech behindert jedoch das Verbacken der Elektrodenmasse, weil das Anthracenöl gerade in einem Temperaturintervall verdampft, in welchem das Verkoken der Elektrodenmasse einsetzt. Die für die Verdampfung des Anthracenöls erforderliche Wärme wird dadurch dem Verkokungsvorgang entzogen. Bei der Verkokung gesellt sich zu den sich ohnehin dabei bildenden Zersetzungsgasen noch das große Volumen des verdampfenden Anthracenöles hinzu, wobei diese Gase tendenziell nach unten in den Reduktionsofen entweichen, was zu Hohlraumbildung führt. Durch Riß- und Hohlraumbildung wird jedoch der Verkokungsprozeß und damit die Qualität der gebrannten Elektrode negativ beeinflußt.

Bekannt ist, daß das Brennprofil in der Elektrodenmasse in Höhe der wassergekühlten Stromzuführungsplatten, welche den Eisenblechmantel reibschlüssig umgreifen, von der Mitte nach außen hin abfällt. Unmittelbar hinter den wassergekühlten Stromzuführungsplatten liegt noch weiche Elektrodenmasse vor, während zur Mitte hin die Elektrode bereits verfestigt ist. Die Tatsache, daß die Elektrodenmasse in einem gekühlten Bereich gegenüber einem nicht gekühlten Bereich länger weich und damit fließfähig bleibt, ist wegen offensichtlich unzureichend vorhandener Brennwärme nicht verwunderlich. Bei der Hohlelektrode kommt zu dem wassergekühlten Bereich bei den Stromzuführungsplatten zusätzlich der Bereich um das im Zentrum der Hohlelektrode angeordnete Beschickungsrohr hinzu. Durch das Beschickungsrohr wird etwa 20 % der kalten Möllermischung in feinkörniger Form mit Hilfe eines Spülgases in den Reduktionsofen eingebracht, wodurch das Beschickungsrohr erheblich abgekühlt wird. Temperaturmessungen ergaben, daß die Außenseite des Beschickungsrohres ohne Durchblasen von Möllermischung eine Temperatur von etwa 1000°C aufweist, während die Temperatur an dieser Stelle bei Materialfluß durch das Beschickungsrohr auf etwa 600°C zurückgeht. Die Kühlung an der Außenwand des Beschickungsrohres hat bei Verwendung eines Steinkohlenteerpeches mit einem hohen Anthracenöl-Gehalt die folgende Konsequenz: Der Brennvorgang führt zunächst zur Verdampfung des Anthracenöles, wobei der Dampf nicht durch die Oberfläche am Kopf der Elektrode sondern in Richtung Elektrodenspitze in den Reduktionsofen entweicht. Passiert der Dampf dabei Bereiche, in welchen die Temperatur unterhalb des Siedepunktes des Anthracenöles liegt, so kondensiert sich der Dampf. Dies ist an den wassergekühlten Stromzuführungsplatten und durchgehend am Beschickungsrohr der Fall, wo die Elektrodenmasse dementsprechend relativ stark anthracenölhaltig und damit entsprechend plastisch ist. Dabei besteht unter dem Druck der darüber lastenden Elektrodenmasse die Tendenz eines Materialflusses in Richtung der Elektrodenspitze. Diese Tendenz führt an dem von der Brennzone bis zur Elektrodenspitze durchgehend gekühlten Beschickungsrohr insbesondere dann zu einem Massefluß, wenn sich am gebrannten Elektrodenstumpf Spalten ausgebildet haben, beispielsweise von den im Eisenblechmantel angeordnete Lamellen herrührende Spannungsrisse, während für den Fall des Vorliegens eines kompakt ausgebildeten Elektrodenstumpfes mit normaler Porosität nur dampfförmiges Anthracenöl in den Reduktionsofen entweicht.

Es ist daher Aufgabe der vorliegenden Erfindung, die im wesentlichen aus Koksstaub, Anthrazitstaub, körnigem Anthrazit und Steinkohlenteerpech bestehende Mischung der Elektrodenmasse für selbstbrennende Dauerelektroden, so zu verändern, daß ein Gleiten der ungebrannten Elektrodenmasse in den Eisenblechmänteln nicht erfolgt. Das wird erfindungsgemäß unter bewußter Inkaufnahme von Nachteilen bezüglich des Zusammenfließens beim Einfüllen der Elektrodenmasse in die Eisenblechmäntel dadurch erreicht, daß bei Ausbildung der Dauerelektroden als Hohlelektroden das in der Mischung verwendete Steinkohlenteerpech einen Tropfpunkt nach UBBELOHDE von 55 bis 100°C, vorzugsweise von 80 bis 95°C, aufweist.

Bei der Elektrodenmasse gemäß der Erfindung wird das Gleiten der ungebrannten Elektrodenmasse offensichtlich dadurch verhindert, daß das verwendete Steinkohlenteerpech geringere Mengen Anthracenöl enthält, wobei gleichzeitig die vorhandene Wärme dem Brennprozeß zur Verfügung steht und nicht für das Verdampfen von Anthracenöl verbraucht wird.

Bei der erfindungsgemäßen Elektrodenmasse kann in der Regel der Nachteil, der mit dem Schmelzverhalten des Steinkohlenteerpeches mit höherem Tropfpunkt bei niedriger Temperatur verbunden ist, ohne Auswirkung hingenommen werden. Wenn in Ausnahmefällen zur Vermeidung von Schwierigkeiten bei der Herstellung von fertiger Elektrodenmasse ein Steinkohlenteerpech an der unteren Grenze des erfindungsgemäßen Tropfpunktintervalles verwendet werden muß, so kann es erforderlich sein, durch apparative Vorkehrungen (Anordnen von Schikanen am Beschickungsrohr der Elektrode, Kurzschließen ihres Beschickungsrohres mit dem Eisenblechmantel) das Abgleiten von Elektrodenmasse entlang dem Beschickungsrohr in den Reduktionsofen zu verhindern.

Durch die Elektrodenmasse gemäß der Erfindung werden Elektrodenbrüche verhindert und dadurch der vorteilhafte Einsatz von Hohlelektroden bei der Phosphorherstellung ermöglicht.

Die erfindungsgemäße Elektrodenmasse kann mit Vorteil in Form einer vorgefertigten stückigen Masse in den Eisenblechmantel der Elektrode hineingeschüttet werden.

Beispiel 1 (Vergleichsbeispiel)

Ein mit drei Elektroden (Durchmesser: 135 cm) versehener und mit Drehstrom bei einer mittleren Leistung von 56 MW betriebener elektrothermischer Reduktionsofen zur Herstellung von gelbem Phosphor war mit zwei herkömmlichen Elektroden und versuchsweise mit einer Hohlelektrode versehen. In die Eisenblechmäntel der drei Elektroden wurde eine 110°C heiße flüssige Mischung mit einem Gehalt von 60 Gewichts% Koks- und Anthrazitstaub, 20 Gewichts% körnigem Anthrazit und 20 Gewichts% Steinkohlenteer-Weichpech (Tropfpunkt nach UBBELOHDE: 48°C) eingefüllt.

Während die herkömmlichen Elektroden einen Abbrand von 52 kg Elektrodenmasse pro t produzierten Phosphors aufwiesen, betrug der Abbrand an der Hohlelektrode nur 28 kg Elektrodenmasse pro t produzierten Phosphors.

Im Laufe eines Tages wurde ein spontanes Absinken des Standes der Elektrodenmasse im Eisenblechmantel der Hohlelektrode festgestellt, wobei der Verlust an Elektrodenmasse dem Abbrand von 4 bis 5 Tagen entsprach.

Zur Vermeidung eines Elektrodenbruches wurde der elektrothermische Reduktionsofen zu diesem Zeitpunkt abgestellt.

Beispiel 2 (gemäß der Erfindung)

Der in Beispiel 1 verwendete elektrothermische Reduktionsofen wurde auf drei Hohlelektroden umgerüstet. In ihre Eisenblechmäntel wurde eine stückige Masse eingefüllt, die aus 57 Gewichts% Koks- und Anthrazitstaub, 21 Gewichts% körnigem calziniertem Anthrazit und 22 Gewichts% Steinkohlenteer-Hartpech (Tropfpunkt nach UBBELOHDE: 92°C) bestand.

Der Abbrand betrug an jeder Elektrode 24 kg Elektrodenmasse pro t produzierten Phosphors.

Nach einer Betriebszeit von drei Monaten ergab eine Inspektion der Elektroden gelegentlich eines anderweitig bedingten Ofenstillstandes, daß alle drei Elektroden hart gebrannt und auch in ihrer sonstigen Beschaffenheit einwandfrei waren. Während dieses Zeitraumes waren keine Unregelmäßigkeiten bezüglich des Füllstandes der Elektrodenmasse in den Eisenblechmänteln aufgetreten.

Beispiel 3 (gemäß der Erfindung)

Es wurde der in Beispiel 1 angegebene elektrothermische Reduktionsofen verwendet.

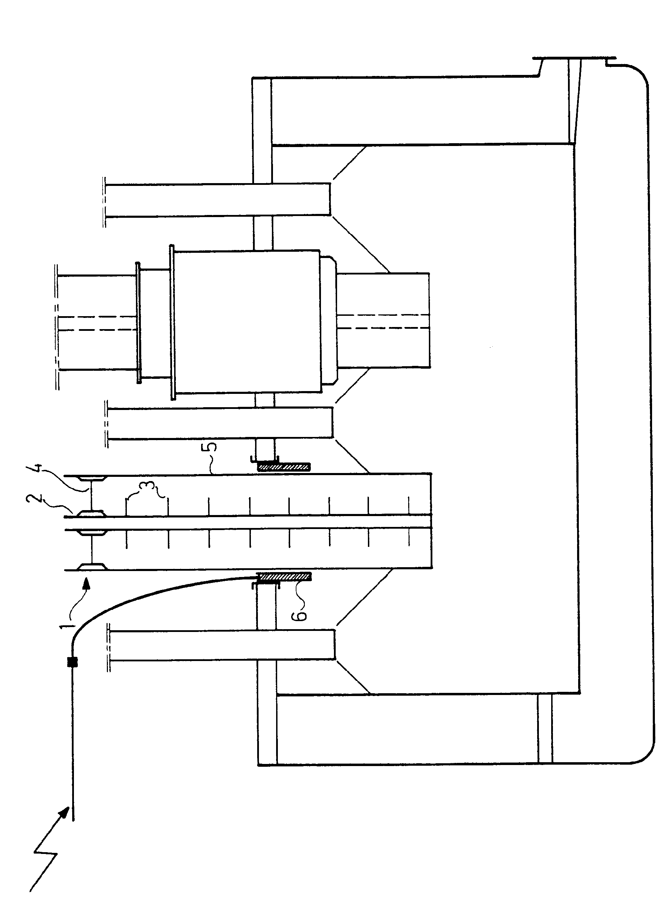

In seiner Hohlelektrode 1 (vergl. die Figur) befand sich ein Beschickungsrohr 2 mit einem lichten Durchmesser von 100 mm und einer Wandstärke von 4,5 mm. Auf dem Beschickungsrohr 2 waren Blechscheiben 3 mit einem Durchmesser von 170 mm in einem Abstand voneinander von etwa 50 cm als Schikanen gegenüber gleitender Elektrodenmasse aufgezogen. Die Zentrierung des Beschickungsrohres 2 erfolgte mit über den Umfang verteilten Distanzstäben 4 aus Flacheisen, welche mit dem Eisenblechmantel 5 und dem Beschickungsrohr 2 verschweißt waren.

In die Eisenblechmäntel der drei Elektroden wurde eine 120°C heiße flüssige Mischung aus 60 Gewichts% Koks- und Anthrazitstaub, 20 Gewichts% körnigem Anthrazit und 20 Gewichts% Steinkohlenteer-Weichpech (Tropfpunkt nach UBBELOHDE: 60°C) eingefüllt.

Nach Einschalten des elektrothermischen Reduktionsofen floß ein elektrischer Nebenstrom von den Stromzuführungsplatten 6 über den Eisenblechmantel 5 und die Distanzstäbe 4 zum Beschickungsrohr 2 und damit in den elektrothermischen Reduktionsofen.

Das mit Hilfe der Stromwärme beheizte Beschickungsrohr wies auch bei voller Beaufschlagung mit der mit Hilfe eines Spülgases eingebrachten feinkörnigen Möllermischung im Bereich unterhalb der Stromzuführungsplatten stets eine Temperatur von mehr als 800°C auf.

Während die herkömmlichen Elektroden einen Abbrand von 51 kg Elektrodenmasse pro t produzierten Phosphors aufwiesen, betrug der Abbrand an der Hohlelektrode nur 26 kg Elektrodenmasse pro t produzierten Phosphors.

Auch an der Hohlelektrode traten keine Verluste an Elektrodenmasse durch Absinken ihres Standes im Eisenblechmantel auf.

Die Ermittlung der Tropfpunkte der in den Beispielen verwendeten Peche erfolgte nach der in DIN 51 801, Teil 2 (Dezember 1980) angegebenen Vorschrift.

**Patentansprüche**

1. Elektrodenmasse für selbstbrennende, als Hohlelektroden ausgebildete Dauerelektroden in elektrothermischen Reduktionsöfen zur Herstellung von gelbem Phosphor, bestehend im wesentlichen aus einer Mischung aus Koksstaub, Anthrazitstaub, körnigem Anthrazit und Steinkohlenteerpech, dadurch gekennzeichnet, daß das Steinkohlenteerpech einen Tropfpunkt nach UBBELOHDE von 55 bis 100°C aufweist.

2. Elektrodenmasse nach Anspruch 1, dadurch gekennzeichnet, daß das Steinkohlenteerpech einen Tropfpunkt nach UBBELOHDE von 80 bis 95°C aufweist.

EP 0 372 235 B1

**Claims**

1. Electrode mass for self-burning permanent electrodes in the shape of hollow electrodes in electrothermal reduction furnaces for the production of yellow phosphorus, essentially consisting of a mixture of coke dust, anthracite dust, granular anthracite and coaltar pitch, wherein the coaltar pitch has an UBBELOHOE melting point of 55 up to 100°C.

2. Electrode mass according to claim 1, wherein the coaltar pitch has an UBBELOHOE melting point of 80 up to 95°C.

**Revendications**

1. Masse d'électrodes pour des électrodes permanentes auto-combustibles sous forme d'électrodes creuses dans de fours de réduction électrothermiques pour la production de phosphor blanc consistant essentiellement d'un mélange de poussier de coke, de poussier d'anthracite, d'anthracite granuleux et de brai d'houille, caractérisée en ce que le brai d'houille a un point d'égouttement selon UBBELOHDE de 55 à 100°C.

2. Masse d'électrodes selon la revendication 1, caractérisée en ce que le brai d'houille a un point d'égouttement selon UBBELOHDE de 80 à 95°C.

5